# EUROPÄISCHE PATENTSCHRIFT

(11) **EP 0 413 893 B1**
(45) Veröffentlichungstag und Bekanntmachung des Hinweises auf die Patenterteilung: **29.06.1994**
(21) Anmeldenummer: 90104786.0
(22) Anmeldetag: 14.03.1990
(51) Int. Cl.: H02H 7/08

(54) **Verfahren und Schaltungsanordnung zur Überwachung von elektromotorischen Stellgliedern**
Process and circuit for monitoring of regulating elements with electric motors
Procédé et circuit pour la surveillance d'organes de réglage à moteur électrique

(30) Priorität: 25.08.1989 DE 3928160
(43) Veröffentlichungstag der Anmeldung: 27.02.1991
(73) Patentinhaber: VDO Adolf Schindling AG, D-60487 Frankfurt (DE)
(72) Erfinder: Hennig, Thomas, D-6230 Sossenheim (DE)
(74) Vertreter: Klein, Thomas, Dipl.-Ing. (FH)

(56) Entgegenhaltungen:
- EP-A- 0 072 022
- US-A- 3 883 786

## Beschreibung

Die Erfindung betrifft ein Verfahren und eine Schaltungsanordnung zur Überwachung von elektromotorischen Stellgliedern, die an eine Brückenendstufe angeschlossen sind, bei welchem die Istwerte der Ströme in den Brückenzweigen mit den für den jeweiligen Schaltzustand gültigen Sollwerten verglichen werden.

Gemäß US-A-3 883 786 ist eine Anordnung bekannt, bei welcher ein elektromotorisches Stellglied an eine Brückenendstufe angeschlossen ist. Die Istwerte der Ströme in den Brückenzweigen werden in einer Verarbeitungseinheit mit den für den jeweiligen Schaltzustand der Brückenendstufe gültigen Sollwerten verglichen.

Elektromotorische Stellglieder erfüllen häufig eine sicherheitsrelevante Funktion, so daß bei einem Ausfall oder Fehlverhalten Gefahren auftreten können. Dieses gilt beispielsweise für Stellglieder zur Steuerung der Leistung eines Kraftfahrzeugmotors (E-Gas). Eine Ursache für ein Fehlverhalten eines elektromotorischen Stellgliedes kann beispielsweise ein Fehler in der Zuleitung zwischen einer Endstufe und dem Motor des Stellgliedes sein. Ein derartiger Fehler kann aus einem Masseschluß, einer Unterbrechung der Zuleitung oder einem Schluß gegen die Betriebsspannung oder aus Kombinationen dieser Fehler bestehen.

Aufgabe der vorliegenden Erfindung ist es, eine Überwachung von elektromotorischen Stellgliedern zu ermöglichen, die an eine Brückenendstufe angeschlossen sind.

Das erfindungsgemäße Verfahren ist dadurch gekennzeichnet, daß bei einer Parallelschaltung von zwei elektromotorischen Stellgliedern die Ströme in den Brückenzweigen zwischen den Anschlüssen der elektromotorischen Stellglieder an jeweils einem Brückenzweig gemessen werden und in Abhängigkeit vom Vergleichsergebnis und vom Schaltzustand der Brückenendstufe aus einer Tabelle ein gegebenenfalls vorhandener Fehler ausgelesen wird.

Das erfindungsgemäße Verfahren ermöglicht das Erkennen und Unterscheiden von einzelnen der obengenannten Fehler, so daß zweckdienliche Gegenmaßnahmen, beispielsweis eine Signalisierung des Fehlers, das Abschalten der Betriebsspannung oder die Aktivierung einer Notlaufeinrichtung, erfolgen können. Besonders hervorzuheben dabei ist, daß mit nur einer Brückenschaltung zwei parallelgeschaltete Motoren vollständig überwacht werden können.

Gemäß einer Weiterbildung ist vorgesehen, daß ferner die Spannung an einem Anschluß der Brückenendstufe überwacht wird, die sich bei nichtleitenden Brückenzweigen durch Zuführung einer Prüfspannung über einen Widerstand einstellt. Dadurch ist es möglich auch im stromlosen Zustand, wenn also die vier Halbleiterschalter der Brückenendstufe nichtleitend sind, einen Schluß nach Masse bzw. zur Versorgungsspannung zu erkennen.

Eine vorteilhafte Schaltungsanordnung zur Durchführung des erfindungsgemäßen Verfahrens ist dadurch gekennzeichnet, daß jeweils ein Brückenzweig von zwei in Reihe geschalteten Halbleiterschaltern gebildet ist, daß zwischen die Halbleiterschalter ein Strommeßwiderstand eingefügt ist und daß die Anschlüsse des Strommeßwiderstandes mit je einem Eingang eines Differenzverstärkers verbunden sind.

Durch die in den Unteransprüchen aufgeführten Maßnahmen sind vorteilhafte Weiterbildungen und Verbesserungen der erfindungsgemäßen Schaltungsanordnung möglich.

Die Erfindung läßt zahlreiche Ausführungsformen zu. Eine davon ist schematisch in der Zeichnung anhand mehrerer Figuren dargestellt und nachfolgend beschrieben. Es zeigt:
- Fig. 1: ein Blockschaltbild einer erfindungsgemäßen Schaltungsanordnung,
- Fig. 2: ein Stromlaufplan von einem Teil der Schaltungsanordnung nach Fig. 1,
- Fig. 3: eine Brückenendstufe aus der Schaltungsanordnung nach Fig. 2, bei welcher die Fehlermöglichkeiten dargestellt sind, und
- Fig. 4: Tabellen zur Zuordnung der Abweichungen der Ströme, des Schaltzustandes der Brückenendstufe und der Fehler.

Gleiche Teile sind in den Figuren mit gleichen Bezugszeichen versehen.

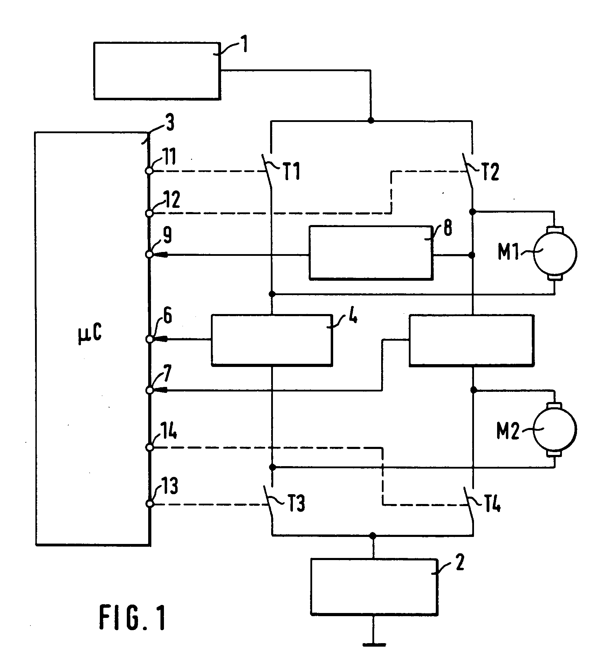

Bei der Schaltungsanordnung nach Fig. 1 ist zum Betrieb der Motoren M1 und M2 zweier im einzelnen nicht dargestellter Stellglieder eine Brückenendstufe vorgesehen, die von den Halbleiterschaltern T1, T2, T3, T4 gebildet wird. Die Brückenendstufe ist an eine Stromversorgungseinheit 1 angeschlossen und über eine Strombegrenzungsschaltung 2 mit Massepotential verbunden.

Die Halbleiterschalter T1 bis T4 werden von einer Steuereinheit, die vorzugsweise von einem Mikrocomputer 3 gebildet wird, gesteuert. In beiden Brückenzweigen ist je eine Stromerfassung 4, 5 vorgesehen, welche eine dem jeweiligen Strom entsprechende Spannung je einem Eingang 6, 7 des Mikrocomputers zuführt. Außerdem wird die Spannung an einem der Knotenpunkte der Brückenendstufe mit Hilfe einer Spannungserfassungsschaltung 8 erfaßt, deren Ausgang mit einem weiteren Eingang 9 des Mikrocomputers verbunden ist.

Beim Betrieb der Schaltungsanordnung nach Fig. 1 werden die Halbleiterschalter T1 bis T4 vom Mikrocomputer je nach gewünschter Drehrichtung bzw. Stillstand der Motoren M1 und M2 in den leitenden bzw. in den nichtleitenden Zustand geschaltet. Je nach Schaltzustand ergeben sich in den Brückenzweigen verschiedene Ströme, welche vom Mikrocomputer überwacht und mit Sollwerten verglichen werden. Wie später im einzelnen erläutert wird, können mit Hilfe einer in einem dem Mikrocomputer zugeordneten Speicher abgelegten Tabelle aus dem Verhalten der Ströme in den Brückenzweigen einzelne Fehler erkannt bzw. voneinander unterschieden werden.

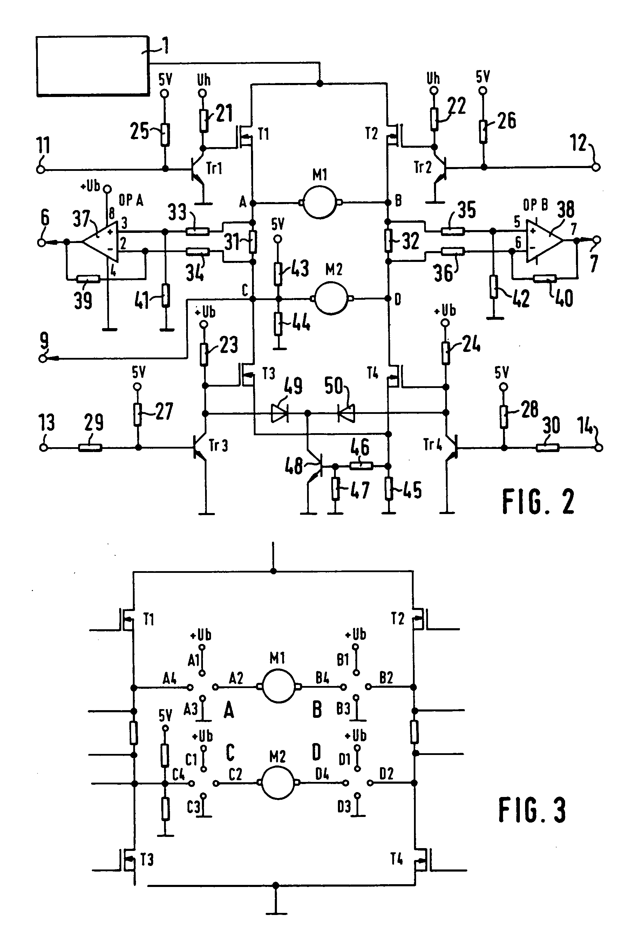

Fig. 2 zeigt ein Ausführungsbeispiel in detaillierterer Darstellung, wobei von dem Mikrocomputer lediglich die Ein- und Ausgänge dargestellt sind. Jedem der Halbleiterschalter T1 bis T4 ist ein Treibertransistor Tr1 bis Tr4 zugeordnet. Die Arbeitswiderstände 21, 22 der Treibertransistoren Tr1, Tr2 sind an eine Spannung Uh angeschlossen, welche höher als die Betriebsspannung Ub ist. Die Kollektoren der Treibertransistoren Tr3, Tr4 sind über Arbeitswiderstände 23, 24 mit der Betriebsspannungsquelle Ub verbunden. Jedem der Treibertransistoren ist zur Erzeugung eines Basisstroms ein Widerstand 25, 26, 27, 28 zugeordnet, der mit einer weiteren Betriebsspannung von 5 V beaufschlagt ist.

Den Basisanschlüssen der Treibertransistoren Tr1 bis Tr4 werden vom Mikrocomputer Steuersignale zugeführt - im Falle der Treibertransistoren Tr3 und Tr4 über je einen Widerstand 29, 30. In den Brückenzweigen ist je ein Strommeßwiderstand 31, 32 angeordnet, dessen Enden über je einen Widerstand 33, 34; 35, 36 mit je einem Eingang eines Operationsverstärkers OP A und OP B verbunden sind. Die Operationsverstärker sind mit je einem Widerstand 39, 40 gegengekoppelt. Je ein weiterer Widerstand 41, 42 verbindet den nichtinvertierenden Eingang mit Massepotential. An den Ausgängen der Operationsverstärker OP A und OP B und damit an den Eingängen 6, 7 des Mikrocomputers steht somit verstärkter Spannungsabfall an den Widerständen 31, 32 an, der dem durch den jeweiligen Widerstand 31, 32 fließenden Strom proportional ist.

In an sich bekannter Weise können zum Betrieb der Motoren M1 und M2 in verschiedene Richtungen entweder die Halbleiterschalter T1 und T4 oder die Halbleiterschalter T2 und T3 in den leitenden Zustand geschaltet werden. Zum Abschalten der Motoren können entweder alle Halbleiterschalter nichtleitend werden oder zum schnelleren Abbremsen die Halbleiterschalter T1 und T2 oder die Halbleiterschalter T3 und T4 leitend geschaltet werden.

Die Verbindungspunkte zwischen den Halbleiterschaltern, den Motoren und den Strommeßwiderständen werden im folgenden als Knoten A, B, C und D bezeichnet. Bei dem Ausführungsbeispiel wird zur weiteren Überwachung über einen Spannungsteiler 43, 44 dem Knoten C eine Spannung zugeführt, die vom Mikrocomputer 3 überwacht wird. Die Widerstände 43, 44 des Spannungsteilers sind derart groß, daß sie den Betrieb der Brückenendstufe bzw. der Motoren M1, M2 nicht beeinflussen. In demjenigen Betriebszustand, in welchem alle Halbleiterschalter nichtleitend sind, bildet sich die durch das Verhältnis der Widerstände 43, 44 bedingte Spannung am Eingang 9 des Mikrocomputers 3 aus. Befindet sich jedoch im Bereich der Motoren ein Schluß nach Masse oder zur Betriebsspannung Ub, so ändert sich die dem Eingang 9 zugeführte Spannung, was im Mikrocomputer ausgewertet wird.

Zur Begrenzung des Stroms durch die Halbleiterschalter T1 bis T4 bzw. durch die Motoren M1, M3 ist eine Strombegrenzungsschaltung vorgesehen. Von einem weiteren Strommeßwiderstand 45 wird eine dem Strom durch die Brückenendstufe entsprechende Spannung abgegriffen und über einen Spannungsteiler 46, 47 der Basis eines Transistors 48 zugeführt. Überschreitet der Strom durch die Brückenendstufe einen noch als zulässig anzusehenden Wert, wird der Transistor 48 leitend und verringert die Steuerspannung der Halbleiterschalter T3, T4 über je eine Diode 49, 50, wodurch der Strom durch beide Brückenzweige begrenzt wird. In ähnlicher Weise ist eine Schutzbeschaltung für Kurzschlüsse nach Masse in der Stromversorgung realisiert.

Zur Erläuterung der in den Zuleitungen zu den Motoren M1, M2 möglicherweise auftretenden Fehler ist in Fig. 3 ein Teil der Schaltungsanordnung nach Fig. 2 dargestellt, wobei die Knoten A bis D in Form von jeweils vier Anschlußpunkten A1 bis A4 bzw. B1 bis B4 usw. dargestellt ist.

Bei intaktem Anschluß der Motore an die Brückenendstufe haben nur die Anschlußpunkte 4 und 2 eines jeden Knotens hintereinander eine Verbindung. Diese Verbindung ist bei einem Abriß der Leitung gelöst. Außerdem kann ein Masseschluß vorliegen, bei dem die Anschlußpunkte 3 und 2 oder 3 und 4 miteinander verbunden sind. Entsprechendes gilt bei einem Schluß zur Betriebsspannung Ub, wobei eine Verbindung zwischen 1 und 4 bzw. 1 und 2 vorliegt. Außer den einfachen Fehlern können auch mehrere Fehler kombiniert auftreten, so kann beispielsweise ein Kabel abreißen und eines der abgerissenen Enden mit Masse in Verbindung geraten, so daß beispielsweise die Punkte 4 und 2 nicht, die Punkte 4 und 3 jedoch miteinander verbunden sind.

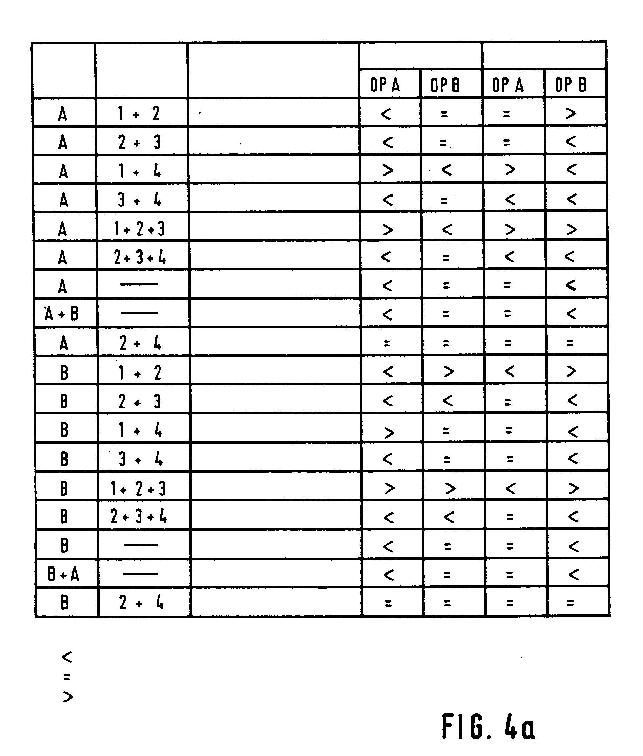

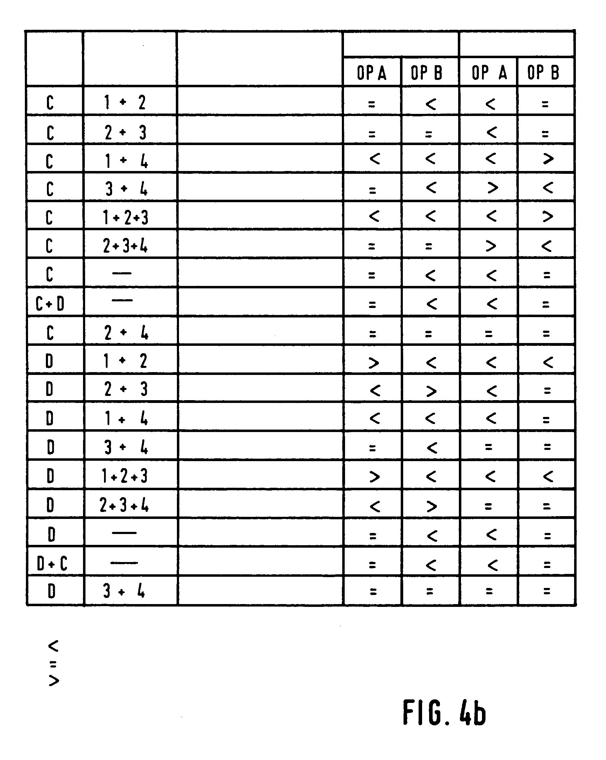

Durch einen Vergleich der durch die Strommeßwiderstände 31, 32 fließenden Ströme mit ihren Sollwerten bei dem jeweiligen Schaltzustand der Brückenendstufe kann darauf geschlossen werden, welcher der möglichen Fehler gegebenenfalls vorliegt. Dazu ist im Mikrocomputer 3 (Fig. 1) bzw. in einem dem Mikrocomputer 3 zugeordneten nichtflüchtigen Speicher eine Tabelle abgelegt, deren Inhalt in Fig. 4a und b dargestellt ist. Dabei sind als Ergebnisse des Soll/Istvergleichs der Ströme für die Schaltzustände "T2-T3 leitend" und "T1-T4 leitend" jeweils angegeben, ob die mit Hilfe der Operationsverstärker OP A und OP B gemessenen Ströme kleiner (<) oder größer (>) als der Istwert sind oder ob der gemessene Strom etwa dem Istwert entspricht (=).

Wird beispielsweise mit Hilfe des Operationsverstärkers OP A ein zu kleiner Strom und mit Hilfe des Operationsverstärkers OP B ein korrekter Strom festgestellt, wenn der Halbleiterschalter T2 und T3 leitend sind, und während des Schaltzustandes "T1-T4 leitend" ein korrekter Strom mit Hilfe des Operationsverstärkers OP A und ein zu großer Strom mit Hilfe des Operationsverstärkers OP B gemessen, bedeutet dieses eine Verbindung der Anschlußpunkte A1 und A2. Die Zuleitung vom Knoten A zum Motor M1 ist also abgerissen, während die abgerissene Leitung des Motors M1 eine die Betriebsspannung Ub führende Leitung berührt.

Neben vielen anderen möglichen Fehlern sind in der Tabelle gemäß Fig. 4a und b auch fehlerfreie Betriebszustände zu erkennen - nämlich dann, wenn alle vier Strommessungen einen korrekten Strom ergeben, in der Tabelle also vier Gleichheitszeichen auftreten.

## Patentansprüche

1. Verfahren zur Überwachung von elektromotorischen Stellgliedern, die an eine Brückenendstufe angeschlossen sind, bei welchem die Istwerte der Ströme in den Brückenzweigen mit den für den jeweiligen Schaltzustand gültigen Sollwerten verglichen werden, dadurch gekennzeichnet, daß bei einer Parallelschaltung von zwei elektromotorischen Stellgliedern die Ströme in den Brückenzweigen zwischen den Anschlüssen der elektromotorischen Stellglieder an jeweils einem Brückenzweig gemessen werden und in Abhängigkeit vom Vergleichsergebnis und vom Schaltzustand der Brückenendstufe aus einer Tabelle ein gegebenenfalls vorhandener Fehler ausgelesen wird.

2. Verfahren nach Anspruch 1, dadurch gekennzeichnet, daß ferner die Spannung an einem Anschluß der Brückenendstufe überwacht wird, die sich bei nichtleitenden Brückenzweigen durch Zuführung einer Prüfspannung über einen Widerstand einstellt.

3. Schaltungsanordnung zur Durchführung des Verfahrens nach Anspruch 1, dadurch gekennzeichnet, daß jeweils ein Brückenzweig von zwei in Reihe geschalteten Halbleiterschaltern (T1, T3; T2, T4) gebildet ist, daß zwischen die Halbleiterschalter jedes Brückenzweiges jeweils ein Strommeßwiderstand (31, 32) eingefügt ist und daß die Anschlüsse des Strommeßwiderstandes (31, 32) mit je einem Eingang eines Differenzverstärkers (OP A, OP B) verbunden sind.

4. Schaltungsanordnung nach Anspruch 3, dadurch gekennzeichnet, daß ferner mit den Anschlüssen der Strommeßwiderstände (31, 32) je ein Anschluß eines elektromotorischen Stellgliedes (M1, M2) verbunden ist.

5. Schaltungsanordnung nach einem der vorhergehenden Ansprüche 3 oder 4, dadurch gekennzeichnet, daß die Ausgänge der Differenzverstärker (OP A, OP B) mit Eingängen eines Mikrocomputers (3) verbunden sind, der die Halbleiterschalter (T1 bis T4) der Brückenendstufe steuert, und daß in einem Speicher eine Tabelle abgelegt ist, welche den Zusammenhang zwischen den Abweichungen der Istwerte von den Sollwerten der Ströme in den Brückenzweigen in Abhängigkeit von dem jeweiligen Schaltzustand der Brückenendstufe und die entsprechenden Fehler enthält.

6. Schaltungsanordnung nach Anspruch 5, dadurch gekennzeichnet, daß einer der Anschlüsse der Strommeßwiderstände (31, 32) über mindestens einen Widerstand (43), vorzugsweise über einen Spannungsteiler (43, 44) mit einer Spannung beaufschlagbar ist und mit einem weiteren Eingang des Mikrocomputers (3) verbunden ist.

## Claims

1. A method of monitoring electric motor-operated final control elements which are connected to the output stage of a bridge, wherein the actual values of the currents in the bridge arms are compared with set values which are valid for the respective switching state, characterised in that with two electric motor-operated final control elements connected in parallel the currents in the bridge arms between the connections of the electric motor-operated final control elements are each measured at a bridge arm and a defect which may possibly exist is read out from a table depending on the result of the comparison and on the switching state of the output stage of the bridge.

2. A method according to claim 1, characterised in that in addition the voltage which appears due to supplying a test voltage across a resistance when the bridge arms are non-conducting is monitored at a connection of the output stage of the bridge.

3. A circuit arrangement for carrying out the method according to claim 1, characterised in that a bridge arm is formed in each case from two semiconductor switches (T1, T3; T2, T4) connected in series, that a current measuring resistor (31, 32) is inserted in each case between the semiconductor switches of each bridge arm, and that the connections of the current measuring resistor (31, 32) are each connected to an input of a differential amplifier (OP A, OP B).

4. A circuit arrangement according to claim 3, characterised in that in addition a connection of an electric motor-operated final control element (M1, M2) is connected in each case to the connections of the current measuring resistors (31, 32).

5. A circuit arrangement according to either one of the preceding claims 3 or 4, characterised in that the outputs of the differential amplifier (OP A, OP B) are connected to inputs of a microcomputer (3) which controls the semiconductor switches (T1 to T4) of the output stage of the bridge, and that a table is stored in a memory, which table contains the interrelationship between the deviations of the actual values from the set values of the currents in the bridge arms, depending on the respective switching state of the output stage of the bridge, and the corresponding defects.

6. A circuit arrangement according to claim 5, characterised in that one of the connections of the current measuring resistors (31, 32) can be acted upon by a voltage via at least one resistor (43), preferably via a voltage divider (43, 44), and is connected to a further input of the microcomputer (3).

## Revendications

1. Procédé pour la surveillance d'organes de réglage à moteurs électriques qui sont raccordés à un étage terminal d'un montage en pont, procédé dans lequel les valeurs réelles des courants circulant dans les branches du montage en pont sont comparées aux valeurs de consigne valables pour l'état d'enclenchement considéré, caractérisé par le fait que, dans un branchement en parallèle de deux organes de réglage à moteurs électriques, les courants circulant dans les branches du montage en pont sont mesurés entre les raccords des organes de réglage à moteurs électriques, sur une branche respective du montage en pont, puis une erreur éventuellement présente est lue, sur la base d'un tableau, en fonction du résultat de la comparaison et de l'état d'enclenchement de l'étage terminal du montage en pont.

2. Procédé selon la revendication 1, caractérisé, en outre, par la surveillance de la tension qui est appliquée à un raccord de l'étage terminal du montage en pont et qui s'établit, lorsque les branches du montage en pont ne sont pas conductrices, par délivrance d'une tension d'essai par l'intermédiaire d'une résistance.

3. Circuit pour la mise en oeuvre du procédé selon la revendication 1, caractérisé par le fait qu'une branche respective du montage en pont est formée de deux interrupteurs (T1, T3 ; T2, T4) à semi-conducteurs, branchés en série ; par le fait qu'une résistance (31, 32) de mesurage du courant est respectivement intégrée entre les interrupteurs à semi-conducteurs de chaque branche du montage en pont ; et par le fait que les raccords de la résistance (31, 32) de mesurage du courant sont connectés à une entrée respective d'un amplificateur différentiel (OP A, OP B).

4. Circuit selon la revendication 3, caractérisé par le fait qu'un raccord respectif d'un organe de réglage à moteur électrique (M1, M2) est par ailleurs connecté aux raccords des résistances (31, 32) de mesurage du courant.

5. Circuit selon l'une des revendications précédentes 3 ou 4, caractérisé par le fait que les sorties des amplificateurs différentiels (OP A, OP B) sont connectées à des entrées d'un micro-ordinateur (3) qui commande les interrupteurs (T1 à T4) à semi-conducteurs de l'étage terminal du montage en pont ; et par le stockage, dans une mémoire, d'un tableau contenant la corrélation entre les écarts des valeurs réelles par rapport aux valeurs de consigne des courants circulant dans les branches du montage en pont, en fonction de l'état d'enclenchement considéré de l'étage terminal du montage en pont, ainsi que les erreurs correspondantes.

6. Circuit selon la revendication 5, caractérisé par le fait que l'un des raccords des résistances (31, 32) de mesurage du courant peut être sollicité par une tension, par l'intermédiaire d'au moins une résistance (43), de préférence par l'intermédiaire d'un diviseur de tension (43, 44), et est connecté à une autre entrée du micro-ordinateur (3).
